Europäisches Patentamt

(19) European Patent Office

Office européen des brevets

(11) Publication number : **0 453 105 A2**

(12) **EUROPEAN PATENT APPLICATION**

(21) Application number : 91302613.4

(22) Date of filing : 26.03.91

(51) Int. Cl.⁵ : **B65D 75/66, B65B 61/18, B65D 33/25**

(30) Priority : 27.03.90 US 499951

(43) Date of publication of application :
23.10.91 Bulletin 91/43

(84) Designated Contracting States :
CH DE ES FR GB IT LI NL

(71) Applicant : Hayssen Manufacturing Company
P.O.Box 571
Sheboygan Wisconsin 53082-0571 (US)

(72) Inventor : James,Robert C
Post office Box 595,Sheboygan
Wisconsin 53081-0595 (US)

(74) Representative : Eyles, Christopher Thomas et al
W.P. THOMPSON & CO. High Holborn House
52-54 High Holborn
London WC1V 6RY (GB)

(54) Packaging with tear string and resealable closure.

(57) A package comprising a plastic bag (1) containing product having a tear string (23) for tearing the bag open, giving access to the content of the bag with or without a resealable closure, which may then be opened for removal of part of the content and then closed to seal in the remainder. The bag is heat-sealed at its ends and the string extends at its ends into the end seals at one side thereof. The resealable closure (124) comprises mating male and female strands which also extend into the end seals.

EP 0 453 105 A2

FIG.1

This invention relates to packaging in sealed bags, more particularly to such packages with an easy-open feature, and further to such packages with a recloseable feature in addition to the easy-open feature.

The invention relates generally to sealed packages, more particularly bags of the type comprising a bag length of tubing of flexible packaging material which is heat-sealable at least on the inside having heat seals at the ends for sealing product therein, said packages being of the type, e.g. the pillow type with or without gussets, three-side or four-side sealed packages, that may be produced by a vertical form-fill-seal machine (a "VFFS" machine) such as that disclosed in U. S. patent 4,288,965 of Robert C. James, issued September 15, 1981 to Hayssen Manufacturing Company of Sheboygan, Wisconsin, denoted the ULTIMA® machine, ReExamination Certificate B1 4,288,965 issued March 26, 1985, and by a horizontal form-fill-seal machine (an "HFFS" machine) such as that disclosed in U. S. patent No. 3,274,746 of robert C. James et al issued September 27, 1966 to Hayssen Manufacturing Company, denoted the RT machine.

The invention is more particularly directed to the provision of a package such as described with a built-in easy-open feature for opening the package without use of extraneous means such as a scissors or a knife; the provision of a package such as may be produced by the methods and machines shown in the above-noted James and James et al patents with such a feature; the provision of a package having an easy-recloseable (resealable) feature in conjunction with the easy-open feature; the provision of such a package which can be economically made either on a horizontal form-fill-seal ("HFFS") machine or a vertical form-fill-seal ("VFFS") machine with economical adaptation thereof; and the provision of a method of economically manufacturing such packages by utilization of the method involved in the operation of such machines.

The package with the recloseable feature for reclosing (resealing) it after opening it by means of the easy-open feature may be regarded as involving an improvement on a package for slices of cheese such as that sold by Kraft, Inc. under the trade name ZIP-PAK Resealable Packaging, which may be made by a horizontal form-fill-seal ("HFFS") machine of the type shown in said U.S. patent No. 3,274,746. That Kraft package has a recloseable (resealable) closure of the well-known ZIP-PAK type extending lengthwise of the package inwardly of and adjacent one side edge of the package, a stack of cheese slices being disposed between this recloseable closure and the other side, the package being opened by cutting it open along the said one side with a scissors (instructions for cutting it open being printed on the package), then opening the recloseable closure, removing such slices as needed, end resealing the remainder in the package by closing the recloseable closure. Another package of this type, which holds shredded cheese, may be made by a vertical form-fill-seal ("VFFS") machine.

In general, the invention may be applicable to packages with or without the recloseable closure. In either case it comprises a bag made of material which is heat-sealable at least on the inside and which is capable of being cut by a string. The bag has opposed walls joined at two opposite sides thereof, and heat seals between the walls at the other two opposite sides or ends thereof. A cutting string is disposed inside the bag adjacent one of the sides of the bag extending from one end thereof to the other. The end of the string are caught in the end seals. At least one of the ends of the bag is formed for starting a tear at a point inwardly of and adjacent the respective end of the string for tearing off the respective corner portion of the bag and freeing the string at said one end for pulling the string to cut the bag open along said one side. With regard to a package of this invention made with the recloseable feature, there is provided a recloseable closure means extending lengthwise of the bag inwardly of and adjacent the side of the bag with the string.

With regard to the method of manufacturing packages of this invention with or without the recloseable feature, a web of flexible sheet material which is heat-sealable at least on one side which becomes the inside of the packages is formed into tubing with a longitudinal seam. Heat seals are formed across the tubing at package length intervals. The tubing is transversely severed at package length intervals at the seals to provide an end seal for a package being completed and an end seal for the next package to be formed. A unit of product to be packaged is provided in the tubing between successive end seals. A cutting string is delivered from a supply to extend continuously longitudinally inside the tubing at one side of the packages being formed, the string being caught in the seals at each end of the package and being severed along with the tubing at the package length intervals. At least one of the end seals is formed for starting a tear at a point inwardly of and adjacent the respective end of the string for tearing off the respective corner portion of the package and freeing the string at said one end for pulling the string to cut the package open along said one side. With regard to the method of manufacturing the packages with the recloseable feature, each package is formed with recloseable closure means extending lengthwise of the package inwardly of and adjacent the side of the package with the string, each package being formed with the recloseable closure means closed with the units of product being provided in the tubing disposed between the closed recloseable closure means and the other side of the package from the string.

Other objects and features will be in part apparent and in part pointed out hereinafter.

## Brief Description of the Drawings

Fig. 1 is a view generally in perspective of a package of this invention with the easy-open cutting string feature, partly broken away to show interior detail;

Fig. 2 is a view in section generally on line 2--2 of Fig. 1;

Fig. 3 is a view in section generally on line 3--3 of Fig. 1; "

Fig. 4 is a view similar to Fig. 1 showing the package being cut open by the string;

Fig. 4A and 4B are views showing how the package may be manufactured in accordance with this invention utilizing a VFFS machine;

Fig. 4C is a view illustrating a modification of the mode of manufacture;

Fig. 5 is a view showing how the tubing from which the packages are formed may be transversely sealed by a pair of sealing members and transversely severed and the seals incised by a knife of the VFFS machine, the sealing members and knife being shown in transverse section;

Fig. 6 is a section on line 6--6 of Fig. 5;

Fig. 7 is a view in horizontal section of a forming tube or mandrel of a VFFS machine on which packages such as shown in Figs. 1-3 may be made, showing the tubing on the forming tube, spreaders at the lower end of the forming tube for spreading the tubing for the sealing operation, and showing a first mode of guiding the string for incorporation thereof in the packages;

Fig. 8 is a vertical section taken generally on line 8--8 of Fig. 6;

Fig. 9 is a view similar to Fig. 7 showing a second mode of guiding the string;

Fig. 10 is a vertical section taken generally on line 10--10 of fig. 9;

Fig. 11 is view generally in perspective of a package of this invention with an easy-reclose feature in addition to the easy-open feature;

Fig. 12 is a view of the Fig. 11 package in section on line 12--12 of Figure 11 and further partly broken away to show interior detail;

Fig. 13 is a view similar to Figure 11 showing the package being cut open;

Fig. 14 is a view generally in perspective showing a method of this invention for making packages such as shown in Figs. 10 and 11;

Fig. 15 is an enlarged section on line 15--15 of Fig 14;

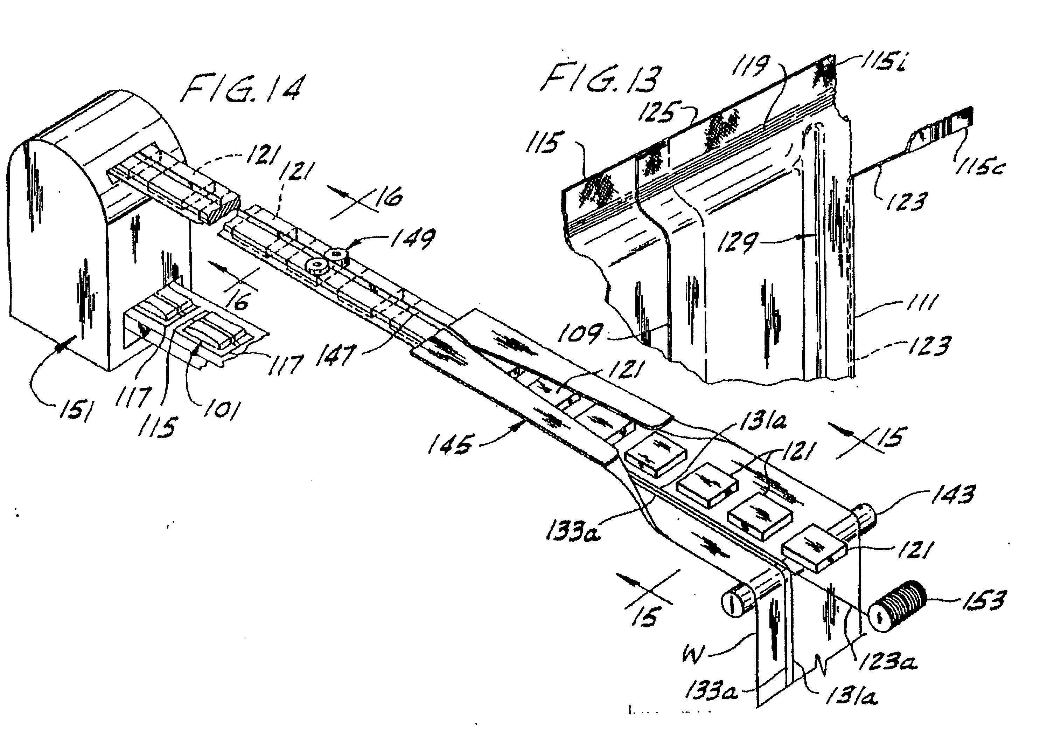

Fig, 16 is an enlarged section on line 16--16 of Fig. 14; and

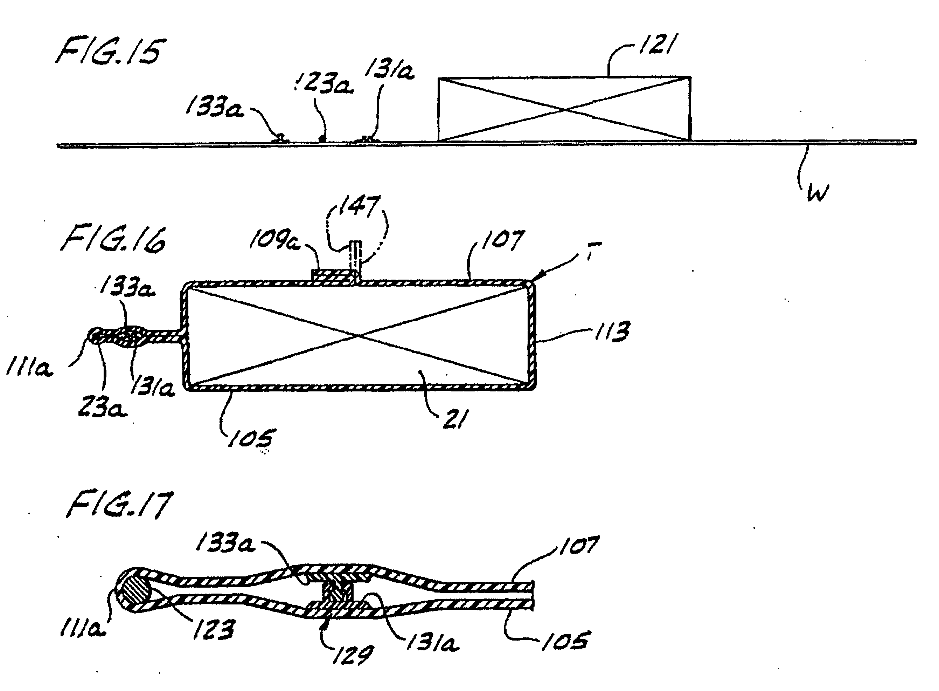

Fig. 17 is an enlarged fragment of Fig. 16;

Corresponding reference characters indicate corresponding parts throughout the several views of the drawings.

## Detailed Description

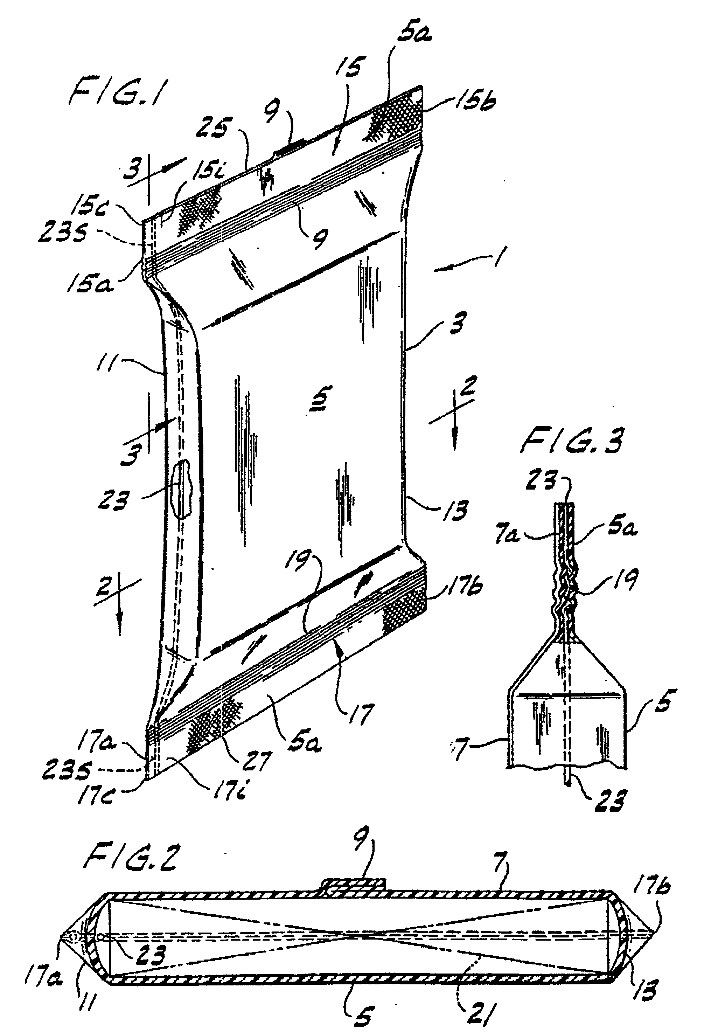

Referring first to Figs. 1-4 of the drawings, a package with an easy-open feature of this invention is designated in its entirety by the reference numeral 1. In general, it comprises a bag 3 made of material which is heat-sealable at least on one side which constitutes the inside of the bag and which is capable of being cut by a string, as will appear. Typically, the bag will be made of a flexible heat-sealable plastic film, such as a laminate as to which the layer on the side which is to constitute the inside of the bag is a heat-sealable plastic such as polyethylene. By way of example, and by example only, the film may be a laminate comprising layers of 0.5 mil polyester, 0.5 mil polypropylene, 0.1 mil Saran, 2.0 mil low density polyethylene (sealant) or 0.75 mil biaxially oriented polyamide, and 2.0 mil low density polyethylene (sealant), in that order from the outside to the inside layer. The bag has opposed walls 5 and 7, wall 5 being referred to as the front wall and wall 7, which includes a longitudinal seam 9, being referred to as the back wall. This longitudinal seam is shown in Figs. 1 and 2 as an inside-face-to-inside face heat sealed seam extending along and laid over on wall 7 of the bag. Walls 5 and 7 are joined at opposite sides of the bag by integral portions of the bag material which portions may be referred to as side walls 11 and 13. The ends of the bag are closed by heat seals as indicated at 15 and 17 between the walls, each of these seals being a flat seal comprising portions 5a and 7a of the bag walls 5 and 7 heat-sealed together in face-to-face relation and joined at the sides of the bag by flattened integral folds 15a, 15b, 17a and 17b. The end seals, as shown, may be formed in conventional manner with corrugations as indicated at 19 extending across the bag. A unit of product constituting the content of the package is indicated at 21 in Fig. 2.

In accordance with this invention the package has a cutting string 23 incorporated therein adjacent one side of the bag, (side 11 as illustrated), this string extending from one end edge 25 to the other end edge 27 of the bag within the bag and adjacent and within the folds 15a, 17a at the sides of the bag at the end seals 15 and 17, the ends of the string being caught in the end seals. Each end of the bag 3 is formed for starting a tear at a point inwardly of and adjacent the respective end of the string 23 for tearing off the respective corner portion of the bag and freeing the string at said end for pulling the string to cut the bag open by means of the string along the side 11 of the bag. For this purpose, each of the end seals 15 and 17 is formed with an incision 15i and 17i extending generally endwise of the bag inwardly from the respective end edge 25 or 27 of the bag and located inwardly of and adjacent the respective side fold 15a, 17a and the respective end of the string 23.

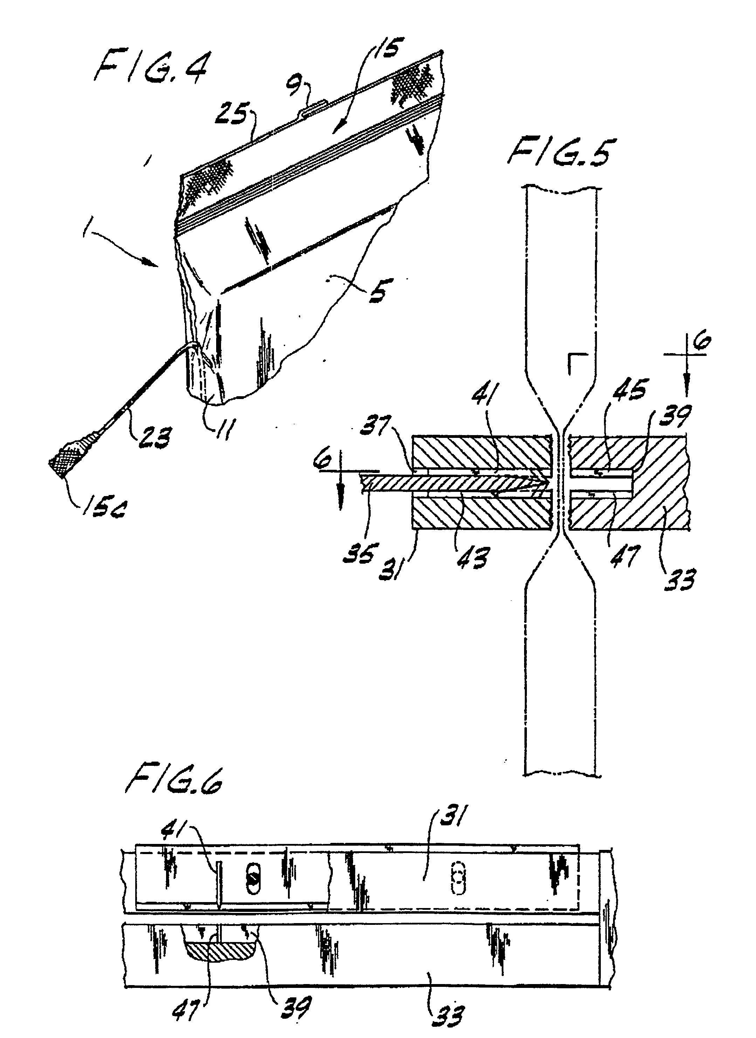

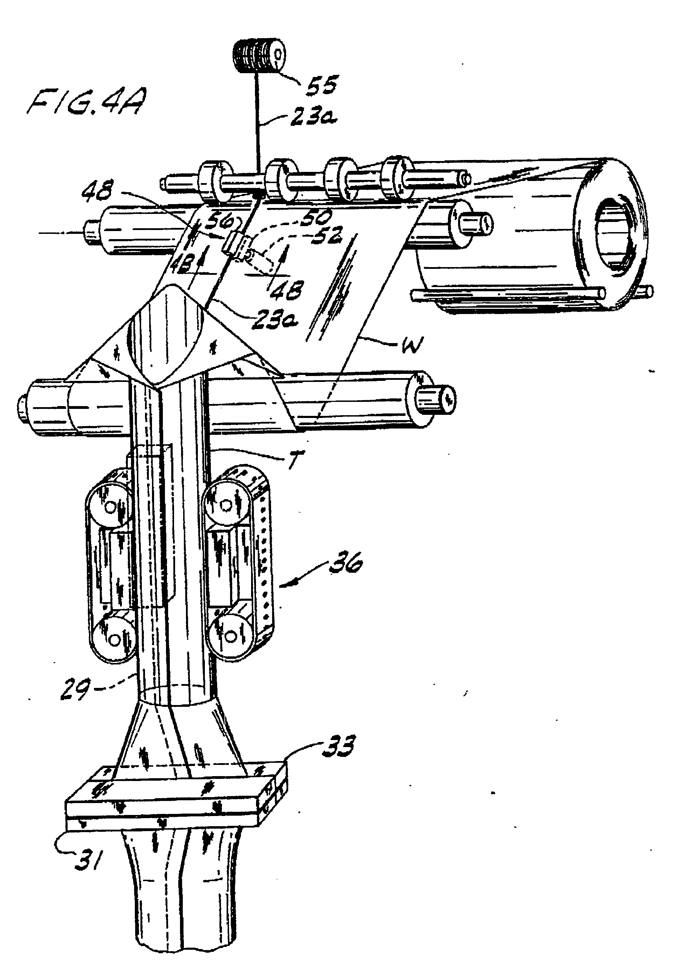

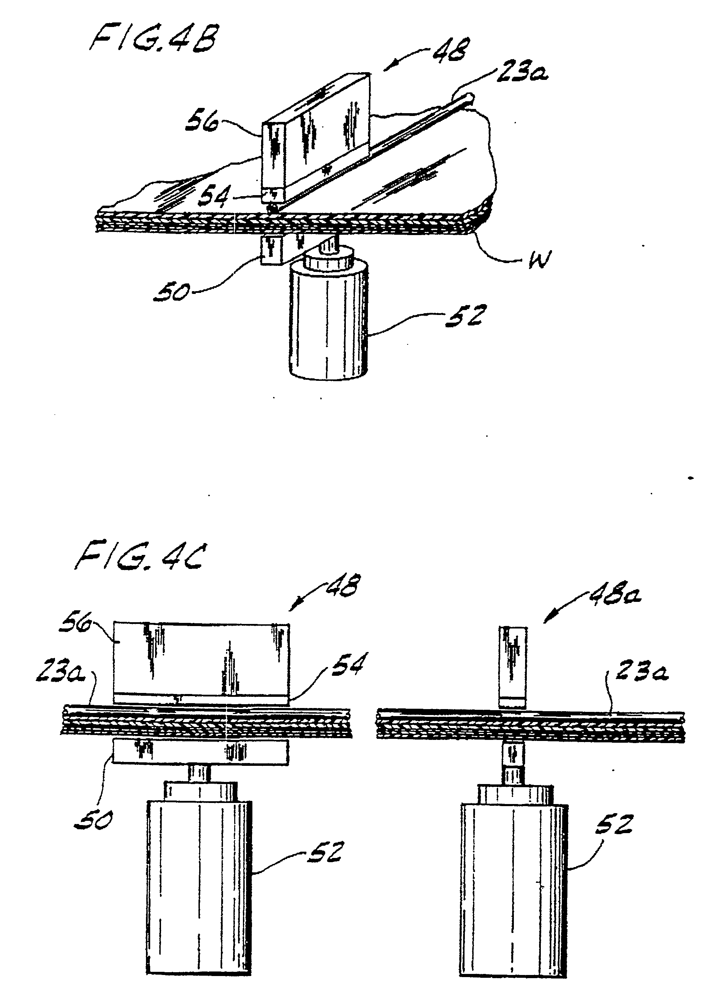

As shown, each incision 15i, 17i is made as a slit or notch extending generally endwise of the bag from the respective end edge 25, 27 of the bag laterally inwardly of and adjacant the respective side fold 15a, 17a and the respective end of the string 23. Each corner portion 15c, 17c of the bag defined by the respective incision 15i, 17i (i.e. the corner portion of the bag between the line of the respective incision and the respective side fold 15a, 17a and the respective end of the string is adapted the be torn off to free the respective end of the string for pulling the string to cut the bag open all along the side 11 of the bag as illustrated in Fig. 4. The corner portion may serve as a tab for facilitating grasping of the end of the string. The string is one of relatively small-diameter cross section adapted when pulled to apply relatively high unit pressure to the side 11 of the bag for evenly cutting the bag material along the length of the bag. The string may be, for example, a nylon monofilament (typically a fishing line) of 0.003 inch to 0.0010 inch diameter.

Preferably, the ends of the string 23 are caught in the seals 15 and 17 by being heat-sealed therein, and since the nylon string per se may not be compatible for heat sealing with the polyethylene inside layer of the bag material, the string is treated to make it compatible for heat sealing with the polyethylene layer. A suitable treatment is one in which the nylon string is passed through an ethylene acrylic acid dispersion such as that sold under the trade designation 37F1 by Morton Thiokol and dried for coating the string therewith. In certain instances, however, it may be possible to rely on the ends of the string being caught in the seals 15 and 17 by reason of these seals being corrugated as indicated at 19.

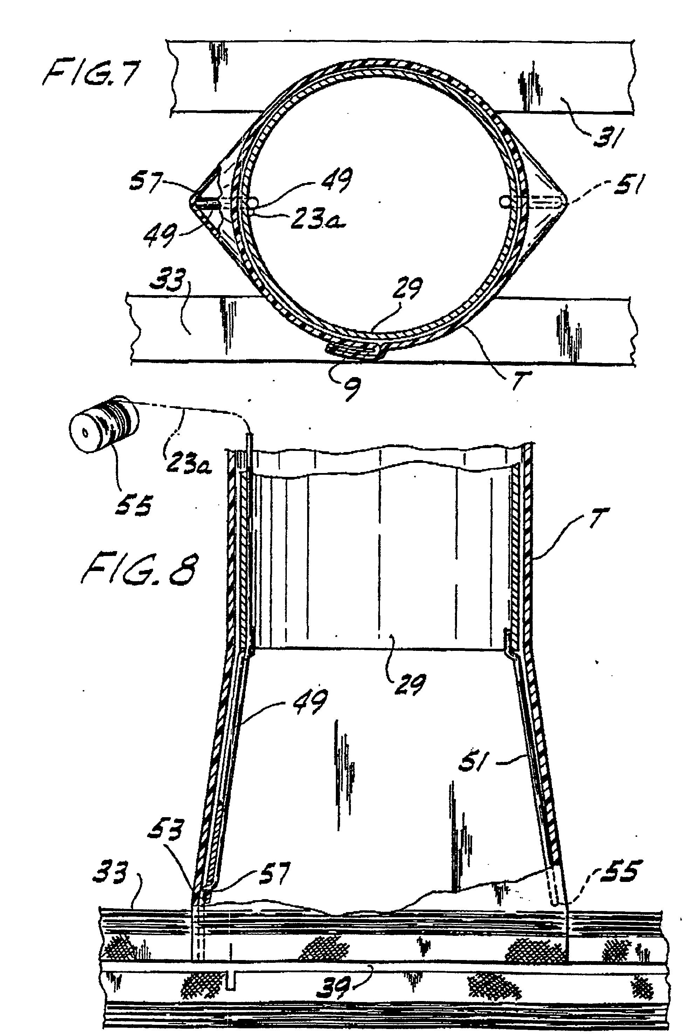

A method of this invention for forming packages such as illustrated in Figs. 1-4 utilizes a VFFS apparatus such as shown in the aforesaid James U. S. patent 4,288,965, which in incorporated herein by reference. Also incorporated herein by reference is the Cherney U. S. patent 4,546,596 issued October 15, 1985 to Hayssen Manufacturing Company, showing additional detail of said VFFS apparatus. Referring to Fig. 4A, there is indicated at 29 the vertical mandrel or forming tube of the VFFS apparatus, and at 31 and 33 the sealing members of the apparatus, with the knife for cutting through the seal made by the sealing members indicated at 35 in Fig. 5. Referring to said U. S. patents 4,288,965 and 4,546,596 it will be understood that a web W of the flexible sheet material which is to be formed into packages is intermittently fed forward from a supply roll R to a forming shoulder at for forming the web into tubing T around the forming tube 29 with the longitudinal margins of the web brought together and sealed to form the back seam 9 for the tubing. Units of product 21 to be packaged are delivered at appropriate intervals down through the forming tube into the lower end of the tubing. The tubing, extending down on the outside of the forming tube, is fed down along the forming tube and off the lower end of the tube in package length increments by vacuum belts as indicated at 36, dwelling between successive feed cycles, the sealing members are closed on the tubing during each dwell to form a top seal for the package being completed and a bottom seal for the next package to be formed, and the knife is operated to cut through the tubing between the said top and bottom seals.

The sealing members 31 and 33 (see Figs. 5-10) are constituted by sealing bars which are movable toward and away from one another, and which have heating means incorporated therein. The knife 35 is slidable in a slot 37 in bar 31 from a retracted position in the bar 31 to an extended position in an elongate groove 39 in bar 33. The tear-starter incisions 15i and 17i in the seals 15 and 17 may be made by incisor blades such as indicated at 41 and 43 extending at right angles to the length of the bar 31 interiorly thereof, and in grooves 45 and 47 extending at right angles to the length of the bar 33 interiorly thereof. The arrangement is such that as knife 35 is extended (moved toward the right as shown in Fig. 5 to sever the tubing, blades 41 and 43 cut the slits 15i and 17i in the seals 15 and 17 lying on opposite sides of the cut made by the knife.

As appears in Fig. 4A, a continuous length 23a of the treated string 23 for providing the cutting strings 13 for the packages is supplied from a suitable wound supply 55 of the string and fed from the supply and guided to extend continuously longitudinally of the web W and then longitudinally of the tubing in such position parallel to and between the side edges of the web is ultimately to extend within the end seal folds at one side of the package, e.g. whithin the end seal folds 15a and 17a, and heat-sealed to the web in such position by heat seals 23S which may be referred to as spot seals spaced at package length intervals along the web W (and the tubing T) with these seals 23S so located along the web as to come between the sealing members 31 and 33 as each package length increment of the tubing T is fed downwardly off the lower end of the forming tube. The spot seals are of such extent lengthwise of the web and the tubing as to provide for the string being caught in the top seal for each package being completed and in the bottom seal for the next package to be formed. The string, pre-sealed to the inside of the tubing at the spot seals, is further heat-sealed for being caught in the end seals by the action of the sealing members 31 and 33 in forming the end seals. Also, with the string 23a having been secured to the web W by the spot seals 23S at the proper location laterally of the web W, the string 23 of each package is caught in each end seal adjacent the fold (15a, 17a) of the end seal at the string side of the package, extending from within one end seal to the other within the bag along that side of the bag.

The sealing of the continuous string 23a to the web W at package length intervals may be effected by heat-sealing means such as indicated at 48 in Figs. 4A and 4B comprising a sealing member 50 having heating means incorporated therein movable as by means of an air cylinder 52 to engage the outside of the web (the bottom of the web as illustrated in Fig. 4A and 4B) and press the web and the string (which is on top of the web) against the elastoneric bottom 54 of a back-up anvil 56. The cylinder 52 is actuated during each dwell of the web to drive the sealing member 50 upward from a lowered retracted position, which it assumes for the package of the web for the web feed, thereby forming the spot seals at the package length intervals.

It is contemplated that the string may be heat-sealed to the web and thus to the packages between the end seals of the package, particularly in the case of bags which are relatively long, as by providing one or more additional sealing means 48A for the continuous string 23a spaced from means 48 along the path of travel of the web as illustrated in Fig. 4B.

Spreaders such as indicated at 49 and 51 in Figs. 7 and 8 may be provided at opposite sides of the forming tube 29 at its lower end for spreading out the tubing T below (downstream from) the lower end of the forming tube. As illustrated, the forming tube is of circular cross section, but it will be understood that it may have a different cross section, such as an oval or a square cross section. The spreaders diverge outwardly from the lower end of the forming tube, the tips 53 and 55 of the spreaders being located laterally outwardly of the sides of the forming tube, the arrangement being such as to effect a transition of the cross section of the tubing T from the cross-sectional shape of the forming tube (e.g. circular) to a wider and flatter crows section for effecting formation of flat seals by the sealing members 31 and 33 without undue wrinkling of the seals. The seals are formed with the flattened integral folds 15a, 15b, 17a, 17b at the sides of the bag adjacent the vertical lines through the tips of the spreaders.

In an alternate method of this invention (without spot-sealing 23S), as shown in Figs. 7 and 8, a continuous length of string such as indicated at 23a for providing the cutting strings 23 for the packages is again supplied from a suitable wound supply 55 of the string, and fed from the supply over suitable guides to extend continuously longitudinally of the tubing T in position to extend within the end seal folds at one side of the package, e.g. within the end seal folds 15a and 17a. The string is fed down within the forming tube 29 and guided for disposition in the end seal folds 15a and 17a by passing it through a string guide opening 57 adjacent the lower (downstream) end of the spreader 49 at the said one side of the package being formed. The string, being caught at its lower end in the end seal at the lower end of the tubing T, is pulled down through the forming tube 29 by the tubing T on each downward feed of the tubing, and is severed by the knife 35 at the stated package length intervals along with the tubing for the production of packages such as shown in Figs. 1-3.

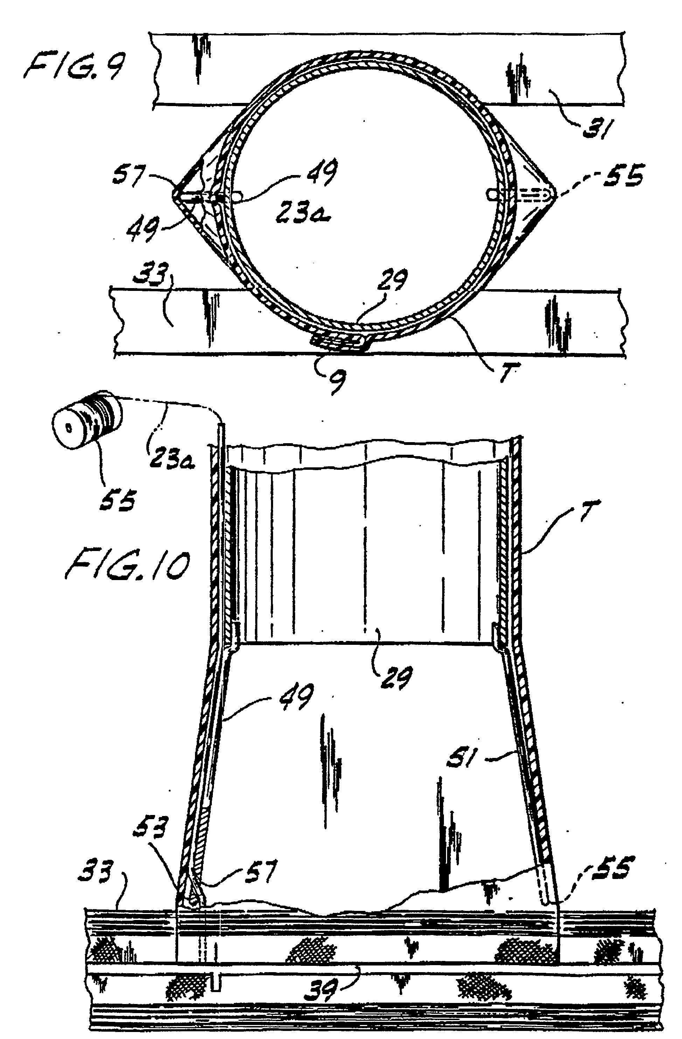

Figs. 9 and 10 illustrate a modification of the above-described method within the purview of the invention wherein the string 23a, instead of being disposed inside the forming tube 29, is disposed on the outside of the forming tube between the forming tube and the tube T.

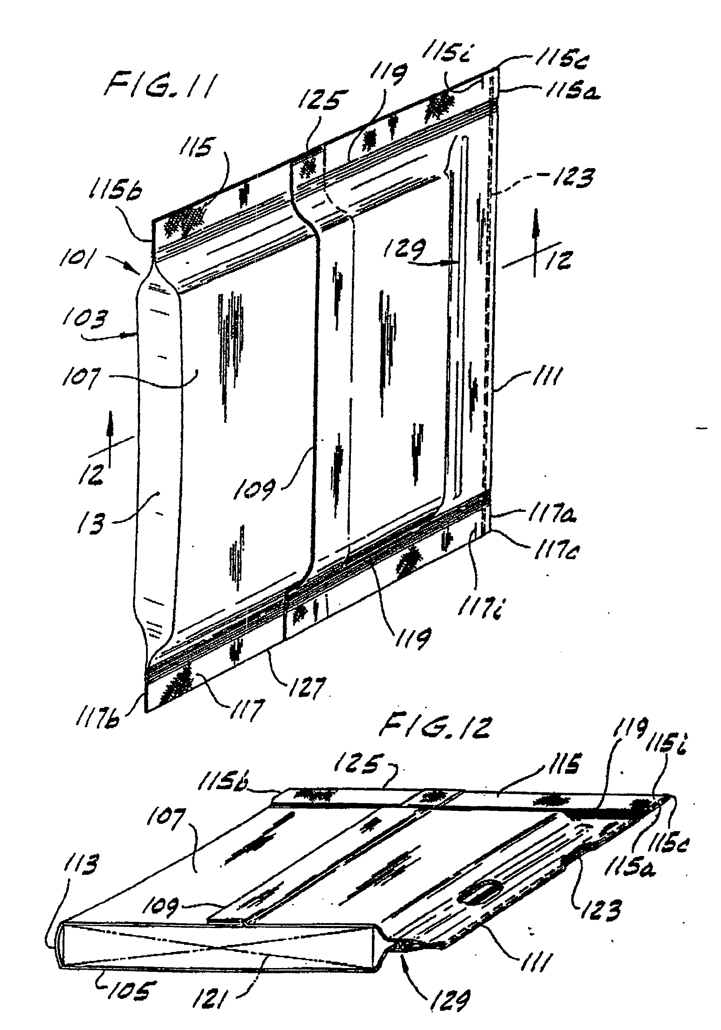

Referring to Figs. 11 and 12 of the drawings, a package of this invention with an easy-recloseable feature in addition to the easy-open feature is designated in its entirety by the reference numeral 101. In general, it again comprises a bag 103 made of material which is heat-sealable at least on one side which constitutes the inside of the bag and which is capable of being cut by a string. The bag has opposed walls 105 and 107, wall 105 being referred to as the front wall and wall 107, which includes a longitudinal seam 109, being referred to as the back wall. Seam 109 is shown as an inside-face-to-inside-face heat-sealed seam (a fin seam) laid over flat on wall 107. Walls 105 and 107 are joined at one side of the bag by a flattened integral fold 111 of the bag material and at the other side by an integral side portion 113 of the bag material. The ends of the bag are closed by heat seals as indicated at 115 and 117 between the walls, each of these seals being a flat seal comprising portions 105a and 107a of the bag walls 105 and 107 heat-sealed together in face-to-face relation and joined at the sides of the bag by flattened integral folds 115a, 115b, 117a and 117b. These end seals, are again formed with corrugations the same as indicated at 19 in Figs. 1 and 3. A unit of product constituting the content of the package is indicated at 121. This may be, for example, a stack of slices of cheese.

In accordance with this invention the package has a cutting string 123 incorporated therein adjacent the stated one side of the bag, i.e. the side constituted by the flattened integral fold 111, this string extending from one end edge 125 to the other end edge 127 of the bag. The string extends within the fold 111 and within the folds 115a, 117a at the sides of the bag at the end seals 115 and 117, the ends of the string being caught in the end seals. Each end of the bag 103 is formed for starting a tear at a point inwardly of and adjacent the respective end of the string 123 for tearing off the respective corner portion of the bag and freeing the string at said end for pulling the string to cut the bag open by means of the string along the side of the bag formed by the fold 111. For this purpose, each of the end seals 115 and 117 is formed with an incision 115i and 117i extending generally endwise of the bag inwardly from the respective end edge 125 or 127 of the bag and located inwardly of and adjacent the respective side fold 115a, 117a and the respective end of the string 23.

As shown, the incisions 115i, 117i correspond to incisions 15i and 17i of Fig. 1. Each corner portion 115c, 117c of the bag defined by the respective incision 15i, 17i (i.e. the corner portion of the bag between the line of the respective incision and the respective side fold 115a, 117a and the respective end of the string is adapted to be torn off to free the respective end of the string for pulling the string to cut the bag open all along the side 111 of the bag as illustrated in Fig. 13. Here again, the corner portion may serve as a tab for facilitating grasping of the end of the string.

The package 101 is provided with recloseable closure means as indicated generally at 129 extending lengthwise of the bag 103 from one end 125 to the other end 127 inwardly of and adjacent the side of the bag at fold 111 (the side with the cutting string 123). The package, as initially supplied, has its content 121 disposed between this recloseable closure means (which is initially closed) and the other side of the package (side 113), the arrangement being such that after cutting the bag open at side 111 by the string 123, the recloseable closure means may be opened for taking out part of the content and then closed to seal in the remainder of the content. The recloseable closure means is of the type comprising an elongate channel (female) member 131 (see particularly Fig. 17) of thermoplastic plastic sealed to one of the walls of the bag, e.g. wall 105 as illustrated, extending lengthwise of the package and a mating tongue (male) member 133 of thermoplastic material sealed to the other wall, e.g. wall 107, extending lengthwise of the package, the tongue member being receivable with a relatively tight fit in the channel member for sealing purposes while being readily disengageable from the channel member. These closure members may be of the well-known ZIP-PAK type. They extend generally from one end seal to the other.

The package 101 is initially supplied with the full content 21 (e.g. a stack of slices of cheese) between the closed (sealed) recloseable closure means 129 and the side 113 of the bag. The package is opened by grasping one or the other of corner portions 115c, 117c and pulling the string 23 in the manner shown in Fig. 13 to tear the bag open all along the side 111 of the bag. Tearing starts at the incision 115i, 117i at the respective end of the bag, the incision facilitating tearing through the respective end seal 115, 117. Once the bag has been torn open at side 111, the recloseable closure means may be opened (by disengaging tongue member 133 from channel member) 131 for taking out part of the content of the package and then closed to seal in the remainder.

Referring to Figs. 14-17, a method of this invention for forming packages such as illustrated in Figs. 11 and 12 is shown to utilize HFFS apparatus such as shown in the aforesaid James et al U. S. patent 3,274,746 and U. S. patent 3,024,581 referred to therein, comprising a roll 143 around which a web W of the flexible sheet material (e.g. polyethylene film) which is to be formed into packages is fed from a supply roll R over a table (not shown) to a former indicated at 145 for forming the web into tubing T with the longitudinal margins 147 of the web brought together in upstanding face-to-face relation, means 149 (typically heated rollers) for heat-sealing the margins together to form the back seam 9 for the tubing T, the seam being laid over flat on the tubing, and means 151 for forming heat seals across the tubing at package length intervals and transversely severing the tubing at package length intervals at the seals to provide an end seal (e.g. 115) for a package 101 being completed and an end seal (e.g. 117) for the next package to be formed. Units of product 121 to be packaged are delivered on to the web W as it travels toward the former 145 with the units spaced at package length intervals and becoming enwrapped in the tubing spaced at said intervals as the tubing is generated. Reference may be made to said U. S. patent 3,024,581 and to U. S. patents 2,976,657; 3,942,304 and 3,943,683 for details of apparatus which may be used at 51 for the transverse sealing and severing of the tubing at package length intervals between successive units of product 21. All these patents 2,976,657, 3,024,581, 3,274,746, 3,942,304 and 3,943,683 are incorporated herein by reference.

In accordance with this invention, the web W is formed as shown in Figs. 14-16 into the tubing T with the continuous longitudinal seam denoted 109. Heat seals having a width (i.e. the dimension lengthwise of the tubing and the packages) corresponding to twice the width of a single seal 115, 117 are formed across the tubing by means 149 at package length intervals and the tubing is transversely severed centrally of each of the wide seals by means 151 at package length intervals to provide an end seal (e.g. 115) for a package being completed and an end seal (e.g. 117) for the next package to be formed, a unit of product 121 to be packaged being provided in the tubing between successive end seals.

The web W as supplied has a continuous strand such as indicated at 131a of the channel member reclosure element and a continuous strand such as indicated at 133a of the tongue member reclosure element sealed thereto on its side which becomes the inside of the tubing, these strands extending parallel to one another longitudinally of the web more toward one side edge than the other of the web and with the center line between the strands located such a distance from as to come at the fold 111 as ultimately made. A continuous length of string such as indicated at 123a for providing the strings 123 for the packages is supplied from a suitable wound supply 153 of the string and delivered on to the web W to extend continuously longitudinally of the web on the center line between the encloseable closure strands 131a, 133a (see Figs. 14 and 15). The continuous length of string may be spot-sealed to the web as above described. The web is folded as indicated at 111a in Figs. 16 and 17 on the center line between strands 131a and 133a and hence on the string 123a in forming the tubing T, and the string accordingly extends within the fold. The strand 131a is disposed on one wall 115a of the tubing and the strand 133a is disposed on the other wall 117a and the two strands are engaged (pressed together) in closed relation, the units of product 121 being disposed between the closed strands and the other side of the tubing indicated at 113a.

In the heat sealing of the tubing T at the package length intervals, the portions of the strands 131a, 133a between the bars which effect the sealing are heated, plasticized and flattened out in the seal, and in the transverse severing of the tubing, the continuous string 123a is severed along with the tubing T, the ends of each severed length 123 of string extending into the end seals 105 and 107 of a package in the folds 115a and 117a of the end seals and being caught therein. The sealing of the tubing T at package length intervals may be effected by heated sealing bars similar to those illustrated in Figs. 5 and 6 and the tear-starter incisions 151i and 171i in the seals 115 and 117 may be made by incisor blades similar to the blades indicated at 41 and 42 shown in Figs. 5 and 6. Reference may also be made to the aforesaid U. S. patent 2,976,657 for more particulars as to the sealing bars and the knife, and to 2,976,657, 3,024,581, 3,942,304 and 3,943,683 as to how means 151 includes a series of sets of sealing bars each with a knife which operate to pull the tubing T and web W and effect the sealing and severing.

It is also contemplated that the tubing may not be completely cut through at the stated package length intervals but, instead, is perforated (as by a serrated knife blade) so that the packages remain connected while being readily separable. In this regard it is intended that, in referring to the tubing as being "transversely severed" at package length intervals, such partial severing is covered as well as complete severing. However, in the case of such perforating or partial severing, the knife would be made in such a way as to cut through the string.

While the bags illustrated in the drawings have a length from end-seal to end seal greater than the width, it is contemplated that there may be instances in which the length from end seal to end seal is less than the width and that the bag may be so printed that the tear string is at what may be termed the top rather than at one side of the package. It is to be understood that in such a package, the top and bottom also constitute two opposite sides of the package, and while the other two opposite margins of the bag may be considered as sides of the bag in one respect, they may also be considered as "ends" because they are constituted by the end seals of the bag.

In view of the above, it will be seen that the several objects of the invention are achieved and other advantageous results attained.

As various changes could be made in the above constructions without departing from the scope of the invention, it is intended that all matter contained in the above description or shown in the accompanying drawings shall be interpreted as illustrative and not in a limiting sense.

## Claims

1. A package comprising a bag made of material which is heat-sealable at least on the inside and which is capable of being cut by a string, said bag comprising a length of tubing of said material having opposed walls joined at two opposite sides of the tubing and joined at the ends of the tubing by heat seals between the walls, a cutting string inside the bag adjacent one of the sides of the bag extending from one end of the tubing to the other, the ends of said string being caught in said end seals, the string being substantially straight throughout its length and free of the bag over the major portion of its length between the end seals, at least one of the ends of the tubing being formed for starting a tear at a point inwardly of and adjacent the respective end of the string for tearing off the respective corner portion of the bag and freeing the string at said one end for pulling the string to cut the bag open along said one side.

2. A package as set forth in claim 1 wherein each end seal comprises portions of the bag walls heat-sealed together in face-to-face relation and joined at one side of the bag by an integral fold, the cutting string being caught in each end seal adjacent the fold of such end seal at said one side of the bag.

3. A package as set forth in claim 2 wherein the string is one of relatively small-diameter circular cross section adapted when pulled to apply relatively high unit pressure to the respective side of the bag for evenly cutting the material along the length of the bag.

4. A package as set forth in claim 3 wherein the package material is of heat-sealable plastic at least on the inside and the plastic of the monofilament is one which per se is not compatible for heat-sealing to the plastic of the package material, and wherein the string is treated so that its ends are heat-sealed in the end seal.

5. A package as set forth in claim 1 having recloseable closure means extending lengthwise of the bag inwardly of and adjacent the side of the bag with the string.

6. The method of forming sealed easy-open packages comprising:

forming a web of flexible sheet material which is heat-sealable at least on one side, which becomes the inside of the packages, into tubing with a longitudinal seam;

forming heat seals across the tubing at package length intervals;

transversely severing the tubing at package length intervals at the seals to provide an end seal for a package being completed and an end seal for the next package to be formed;

and wherein a unit of product to be packaged is provided in the tubing between successive end seals;

further characterized in that a cutting string is applied to the web to extend continuously longitudinally of the web and inside the tubing at one side of the packages being formed;

the string being caught in the seals at each end of each package and being severed along with the tubing at said package length intervals;

and at least one of the end seals is formed for starting a tear at a point inwardly of and adjacent the respective end of the string for tearing off the respective corner portion of the package and freeing the string at said one end for pulling the string to cut the package open along said one side.

7. The method of claim 17 wherein the string is delivered from a supply onto said one side of the web as the web is fed forward to form it into the tubing and is sealed to the web to extend along a line such as to come at said one side of the packages.

8. The method of claim 7 wherein the string is sealed to the web by seals spaced at package length intervals, these seals coming at the heat seals across the tubing.

9. The method of claim 8 wherein the string, per se, is not compatible for heat-sealing to the web, and is treated so that it may be heat-sealed to the web.

10. The method of claim 6 wherein each package is formed with recloseable closure means extending lengthwise of the package inwardly of and adjacent the side of the package "with the string, each package being formed with the recloseable closure means closed with the units of product being provided in the tubing disposed between the closed recloseable closure means and the other side of the package from the string.

FIG.1

FIG.3

FIG.2

FIG.4

FIG.5

FIG.6

FIG.4A

FIG.4B

48

23a

56

54

W

50

52

FIG.4C

48

48a

56

23a

54

23a

50

52

52

FIG.7

FIG.8

FIG.9

FIG.10

FIG. 11

FIG. 12

FIG.14

FIG.13

EP 0 453 105 A2

FIG.15

FIG.16

FIG.17

EP 0 453 105 A2